(19) Europäisches Patentamt

European Patent Office

Office européen des brevets

(11) Veröffentlichungsnummer: **0 281 816 B1**

(12) **EUROPÄISCHE PATENTSCHRIFT**

(45) Veröffentlichungstag der Patentschrift: **13.05.92**

(21) Anmeldenummer: **88102396.4**

(22) Anmeldetag: **18.02.88**

(51) Int. Cl.⁵: **C04B 35/60**, B22D 11/06, //C09K3/14

(54) **Vorrichtung zum Stranggiessen von geschmolzenen Materialien, insbesondere Metalloxyden.**

(30) Priorität: **11.03.87 DE 3707855**

(43) Veröffentlichungstag der Anmeldung:
**14.09.88 Patentblatt 88/37**

(45) Bekanntmachung des Hinweises auf die Patenterteilung:
**13.05.92 Patentblatt 92/20**

(84) Benannte Vertragsstaaten:
**AT CH DE ES FR GB IT LI**

(56) Entgegenhaltungen:
**EP-A- 0 139 071**
**FR-A- 1 056 135**

**PATENT ABSTRACTS OF JAPAN, Band 9, Nr. 132 (M-385)[1855], 7. Juni 1985; & JP-A-60 15 050 (NIPPON KOKAN K.K.) 25-01-1985**

(73) Patentinhaber: **LONZA AG**

**Gampel/Wallis(CH)**

(72) Erfinder: **Dietrich, Rainer, Dr.**
**Thiersteinerrain 65**
**CH-4059 Basel(CH)**
Erfinder: **Burkardt, Norbert**
**Kandelstrasse 5**
**W-7500 Karlsruhe(DE)**
Erfinder: **Kuhn, Peter, Prof. Dr.**
**Prankelstrasse 61**
**W-6940 Weinheim(DE)**

(74) Vertreter: **Finck, Dieter et al**
**Patentanwälte v. Füner, Ebbinghaus, Finck**
**Mariahilfplatz 2 & 3**
**W-8000 München 90(DE)**

EP 0 281 816 B1

# Beschreibung

Die Erfindung betrifft eine Vorrichtung zum schnellen Abkühlen und Erstarren durch Stranggießen von geschmolzenen Materialien, insbesondere Metalloxyden, nach dem Oberbegriff des Patentanspruchs 1.

Bei einer solchen, aus der EP-B1-o o57 651 bekannten Vorrichtung sind zylindrische Walzen mit parallelen Achsen vorgesehen, deren Spalt vor dem Stranggießen durch eine eingestecktes Asbeststück verschlossen ist, und die zusammen mit stirnseitig abaichtend an den Umfangsflachen ihrer Zylindermäntel an-liegenden Dichtungselementen einen Eingußraum bilden. Die für das Stranggießen einzustellende Spaltbreite wird jeweils vorher festgelegt, wobei jeder Spaltbreite entsprechend ausgebildete Dichtungselemente zugeordnet sind. Um den Kern des gebildeten Metalloxydbandes noch im Schmelzzustand beim Durchgang durch die engste Stelle des Walzenspaltes zu erhalten, wird die Intensität der Walzinnenkühlung und die Drehzahl der Walzen entsprechend aufeinander abgestimmt. Dadurch soll die Ausübung von Zwangskräften auf die Walzen ausgeschlossen werden, wie sie sich einstellen würden, wenn eine vollständige Erstarrung des Metalloxydstrangs bereits an der engsten Stelle vorhanden wäre.

Aufgrund der hohen Temperaturunterschiede an der Mantelfläche der Walzen durch die Innenkühlung und der starken lokalen Aufheizung im Kontaktbereich mit der Metalloxydschmelze entstehen in den rotierenden Walzen hohe wechselnde Wärmespannungen, insbesondere an den Übergangsstellen von der Zylinderaußenwand zu den Naben und an den Durchflußöffnungen für das Kühlmittel, wodurch das Material schnell ermüdet und sich Dauerbrüche einstellen.

Die der Erfindung zugrunde liegende Aufgabe besteht nun darin, die Vorrichtung der gattungsgemäßen Art so auszubilden, daß mit konstruktiv einfachen Mitteln die Wärmespannungen in den rotierenden Walzen auf ein Minimum reduziert werden können.

Diese Aufgabe wird ausgehend von der Vorrichtung der gattungsgemäßen Art erfindungsgemäß mit dem im Kennzeichen des Patentanspruchs 1 angegebenen Merkmalen gelöst. Durch die Annäherung der Außenkontur jeder Walze an eine Kugelschale ergibt sich eine kerbarme Ausgestaltung der Walzen, was die Werkstoffermüdung aufgrund der sich dauernd ändernden Wärmespannungen weitgehend reduziert. Dadurch, daß der Kegelstumpfabschnitt einen größeren Hauptkrümmungsradius hat als eine zylindrische Walze mit gleichem Durchmesser, ergibt sich ein enger Spalt in der Nähe der engsten Stellem verglichen mit der zylindrischen Walze von gleichem Durchmesser, und somit eine bessere Wärmeabführung im Spalt. Um einen solchen Spalt bei einer zylindrischen Walze zu erhalten, ist ein wesentlich größerer Walzendurchmesser erforderlich. Für das Verschweißen der bereits auf den Walzen erstarrten Materialschicten im Bereich der engsten Stellen des Spaltes ist ein größer Walzenkrümmungsradius zweckmäßig, damit das Material lange unter Druck gehalten werden kann. Solche Bereiche haben die Walzen im Bereich der Basisfläche jedes Kegelstumpfabschnitts.

Mit der Ausgestaltung nach Anspruch 2 läßt sich auf einfache Weise die Antriebswelle an der Walze außerhalb des Gebietes der großen wechselnden Wärmespannungen befestigen.

Aufgrund der kegelförmigen Ausgestaltung der Walzen schneidet die Wirkungslinie der Walzkraft die Walzenachse ungefähr dort, wo die Walze ihren größten Durchmesser erreicht, so daß bei der fliegenden Lagerung nach Anspruch 2 das Biegemoment am Walzenzapfen sehr klein wird. Außerdem sind die Bauelemente für die Lagerung und den Antrieb der Walze vor der Strahlungshitze des Materialstrangs geschützt. Es können handelsübliche stufenlos einstellbare Motor-Getriebe-Einheiten für den Antrieb der Walzen eingesetzt werden.

Bei der Anordnung der Walzen nach Anspruch 3 naben die Kegelstumpfabschnitte der Walzen in ihren stirnseitigen Bereichen unterschiedliche Umfangsgeschwindigkeiten, was einen Zwangsschlupf des durch den Spalt hindurchgehenden Metalloxyds in diesen Bereichen bedeutet, wodurch auf das Metalloxyd eine Torsionswirkung ausgeübt wird, die bei dem erstarrenden Material zur Ausbildung von engen und regelmäßigen Rissen führt, was die anschließende Zerkleinerung begünstigt.

Mit der Ausgestaltung der Dichtungselemente nach Anspruch 4 läßt sich eine einfache stirnseitige Abdichtung unabhängig vom Walzenspalt aufrechterhalten, wobei zur Änderung des Walzenspaltes entweder nur eine Walze oder beide Walzen in ihrer Achsrichtung verschoben werden.

Mit der Ausgestaltung nach Anspruch 5 haben die einander zugewandten Bereiche der Kegelstumpfabschnitte gleiche Umfangsgeschwindigkeiten, die sich von der Stirnfläche mit dem kleineren Durchmesser zur Basisfläche des Kegelstumpfabschnitts steigern.

Mit der Ausgestaltung der Dichtungselemente nach Anspruch 6 läßt sich die stirnflächenseitige Abdichtung unabhängig von der Spalteinstellung aufrechterhalten, wenn eine der Walzen zur Spaltverstellung in Richtung ihrer Achse oder beide Walzen senkrecht zum Spalt verschoben werden.

Mit der Maßnahme nach Anspruch 7 läßt sich bei den Walzen mit sich kreuzenden Aschsen über der gesamten Breite des Materialstrangs eine gleichmäßige Abkühlzeit erreichen, da in Bereichen der größeren Umfangsgeschwindigkeit der Kegelstumpfabschnitte der Pegel des flüssigen Metalloxydeingusses eine größere Höhe über dem Spalt als in dem Bereich mit den kleineren Umfangsgeschwindigkeiten hat, der sich zur Stirnfläche mit dem kleineren Durchmesser der Kegelstumpfabschnitte hin erstreckt.

Die Annäherung an die Kontur einer Kugelhaube ist mit den Kegelwinkeln nach Anspruch 8 besonders günstig, mit dem Kegelwinkel nach Anspruch 9 optimal.

Mit der Maßnahme nach Anspruch 1o wird ein Abbrennen der Dichtungselemente bei den herrschenden hohen Temperaturen unterbunden.

Die erfindungsgemäße Vorrichtung eignet sich zur Verarbeitung von Ein- und Mehrstoffsystemen keramischer Schmelzen, enthaltend Oxyde, und besonders zur Verarbeitung von keramischen Schmelzen aus Aluminiumoxyd in Mischung mit Baddeleyit und/oder den Oxyden des Zirkons, Magnesiums, Yttriums, Calciums und Chroms in Form von Ein- und Mehrstoffsystemen, insbesondere zu Materialien für Schliefzwecke, als Plasmaspritzpulver und als Sinterpulver für Formteile.

Anhand von Zeichnungen werden Ausführungsbeispiele der Erfindung näher erläutert. Es zeigt:

Fig. 1 eine Draufsicht auf eine Vorrichtung mit Walzen mit parallelen Achsen,

Fig. 2 eine Stirnansicht der Vorrichtung von Fig. 1,

Fig. 3 eine Draufsicht auf eine Vorrichtung mit Walzen mit sich kreuzenden Achsen und

Fig. 4 im Axialschnitt eine Walze der Vorrichtung von Fig. 1 bzw. 3.

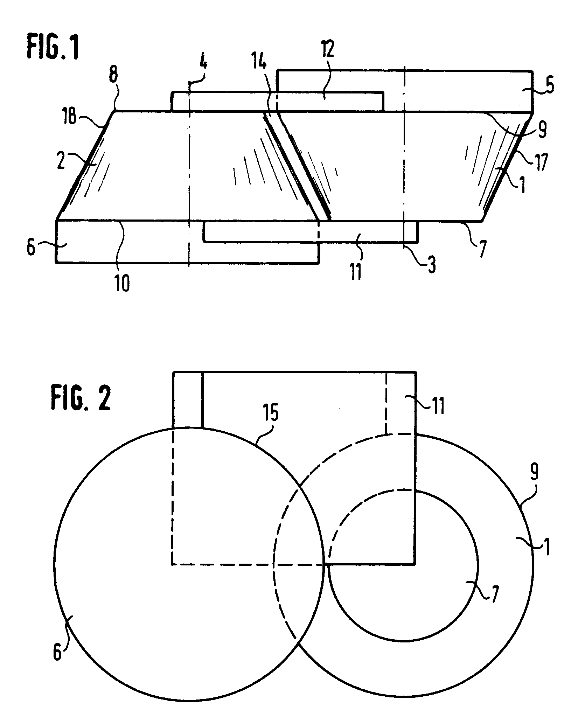

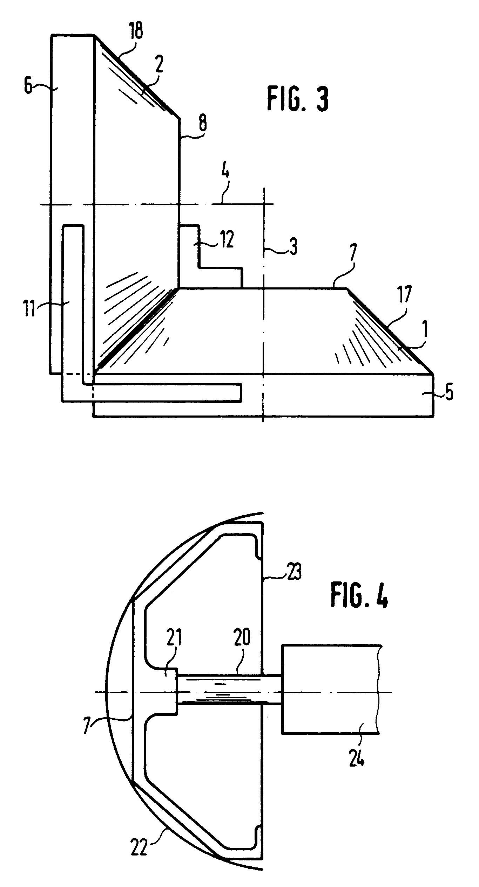

Die in Fig. 1 und 2 gezeigte Vorrichtung besteht aus zwei Walzen 1 und 2 in Form von Kegelstumpfabschnitten, von denen jeder eine Basisfläche 9 bzw. 1o mit größerem Durchmesser und eine Stirnfläche 7 bzw. 8 mit kleinerem Durchmesser aufweist. Die Walzen 1 und 2 sind so angeordnet, daß die Basisfläche 9 der einen Walze 1 mit der kleinen Stirnfläche 8 der anderen Walze 2 in einer Ebene liegen, während die eine Stirnfläche 7 der einen Walze 1 und die Basisfläche 1o der anderen Walze 2 ebenfalls in einer Ebene liegen, die zu der erstgenannten Ebene parallel ist. Bei dieser Anordnung ist die Achse 3 der einen Walze 1 zur Achse 4 der anderen Walze 2 parallel. Die Aschen 3 und 4 sind senkrecht zu den genannten Ebenen, da die Kegelstümpfe mit den Mantelflächen 17 bzw. 18 gerade Kegelstümpfe sind.

An die Basisfläche 9 der einen Walze 1 schließt sich ein zylindrischer Abschnitt 5 an, dessen Durchmesser dem der Basisfläche 9 enstpricht. In gleicher Weise schließt sich an die Basisfläche 1o der anderen Walze 2 ein zsylindrischer Abschnitt 6 an, dessen Durchmesser dem der Basisfläche 1o entspricht. Die Walzen 1 und 2 bilden zwischen ihren mantelfächen 17 udn 18 einen Spalt 14, der durch Verschiebung einer Walze oder beiden Walzen 1, 2 senkrecht zu ihrer Achsen 3, 4 von der Kontaktstellung, also dem Wert Null, auf eine gewünschte Größe einstellbar ist.

Der Eingußraum zwischen den Walzen 1 und 2 über dem Spalt 14 ist durch Dichtungwselemente 11 und 12 stirnseitig abgeschlossen. Wie aus Fig. 2 zu ersehen ist, liegt das eine Dichtungselement 11 and der Stirnfläche 7 der einen Walze 1 stirnseitig an und liegt abdichtend auf der Umfangsfläche des zylindrischen Abschnitts 6 mit einer entsprechend gekrümmten Dichtungsfläche 15 auf, die die Drehung der Walze 2 zuläßt. Bei Einstellung des Spaltes 14 verschiebt sich lediglich die eine Walze 1 mit ihrer Stirnfläche 7 relativ zu dem damit in Kontakt stehenden Dichtungselement 11. Das Dichtungselement 12 ist in gleicher Weise aufgebaut, wobei sich bei der Einstellung des Walzenspaltes 14 das Dichtungselement 12 stirnseitig längs der kleineren Stirnfläche 8 der Walze 2 verschiebt und mit dem zylindrischen Aschnitt 5 der einen Walze 1 in abdichtendem Kontakt bleibt.

Bei dem in Fig. 3 gezeigten Ausführungsbeipiel der Vorrichtung haben die Walzen 1 und 2 einen Kegelwinkel von 90°, so daß sich ihre Achsen 3 und 4 unter einem Winkel von 90° kreuzen. Die Dichtungselemente 11 und 12 sind rechtwinklig abgebogene Winkelplatten, die mit den Umfangsflächen der Zylindrischen Abschnitte 5 und 6 bzw. den Stirnflächen 7 und 8 in abdichtenden, die Drehund der Walzen 1 und 2 zulassendem kontakt stehen. Dadurch bleibt der Eingußraum des Spaltes 14 stirnseitig ausreichend abgedichtet.

Wenn bei der Walzenanordnung von Fig. 3 die Metallschmelze mit den Mantelflächen 17 und 18 der Kegelstumpfabschnitte der Walzen 1 und 2 einen konstanten Kontaktwinkel haben soll, müssen die Achsen 3 und 4 der Walzen 1 und 2 so geneigt werden, daß sie im Bereich der kleineren Stirnflächen 7 und 8 höher liegen als im Bereich ihrer zylindrischen Abschnitte 5 und 6.

Bei der in Fig. 4 gezeigten Walze 1 hat der Kegelstumptabschnitt einen Kegelwinkel von 90°. Die Stirnfläche 7 mit dem kleineren Durchmesser ist von einer Wand mit einer zentralen Nabe 21 an der Innenseite versehen, in der die Antriebswelle 2o drehfest gehalten ist, wodurch die Walze 1 fliegend gelagert ist. Die der Stirnfläche 7 gegenüberliegende Stirnfläche 23 des zylindrischen Abschnitts 5 ist im wesentlichen offen. In diesem Bereich ist die Antriebswelle 2o mit einem Antriebsaggregat 24 gekoppelt, das durch die Walze 1 vor Wärmestrahlung geschützt ist. Die Walze 1 wird innenseitig durch im Bereich der Stirnfläche 7 mit einer Tangentialkomponente ausgedüstes Wasser gekühlt, das durch die Zentrifugalkraft in Kontakt mit der Innenwand der Walze 1 gehalten und längs dieser Wand zu einer Umlenkung an der Stirnfläche 23 des zylindrischen Abschnitts 5 geführt und dort seitlich abgezogen wird.

Die Dichtungselemente 11 und 12 sind, was nicht gezeigt ist, über Bohrungen und Anschlüsse mit einer Druckquelle verbunden, aus der eine Schutzgas wie Stickstoff oder Argon in die aus Graphit bestehenden Dichtungselemente 11 und 12 eingeführt wird, wodurch jeder Luftsauerstoff aus den Dichtungselemente 11 und 12 und in ihrem Wandbereich verdrängt ist, sod daß ein Verbrennen des Graphits bei den vorliegenden hohen Temperaturen nicht möglich ist.

Die optimale Annäherung der Ausgestaltung der Walze 1 in Fig. 4 an eine Kugelhaube ist durch die Kontur 22 veranschaulicht.

## Patentansprüche

1. Vorrichtung zum schnellen Abkühlen und Erstarren durch Stanggießen von geschmolzenen Materialien, insbesondere Metalloxyden, bestehend aus zwei hohlen, innen fluidgekühlten, drehangetriebenen Walzen (1, 2), zwischen denen ein vor dem Stranggießen geschlossener und während des Stranggießens offener Spalt (14) vorgesehen ist, und aus den Eingußraum zwischen den Walzen (1, 2) stirnseitig abdekkenden, die Walzendrehung zulassenden Dichtungselementen (11, 12), dadurch **gekennzeichnet,** daß jede der Walzen (1, 2) als Kegelstumpfabschnitt ausgebildet ist, daß angrenzend an die den größeren Durchmesser aufweisende Basisfläche (9, 1o) eines jeden Kegelstumpfabschnitts ein zylindrischer Abschnitt (5, 6) mit dem Durchmesser der Basisfläche (9, 1o) und einer im wesentlichen offenen Stirnfläche (23) vorgesehen ist, und daß jeder Kegelstumpfabschnitt auf der Stirnfläche (7, 8) mit dem kleineren Durchmesser von einer ebenen Wand abgeschlossen ist, wobei die Außenform jeder Walze (1, 2) an die Kontur einer Kugelhaube (22) angenähert ist.

2. Vorrichtung nach Anspruch 1, dadurch **gekennzeichnet,** daß sich eine die Walze (1, 2) treibende Welle (2o) durch die im wesentlichen offene Stirnfläche (23) des zylindrischen Abschnitts(5, 6) bis zu der Stirnfläche (7, 8) des Kegelstumpfabschnitts mit dem kleineren Durchmesser erstreckt und dort befestigt (Nabe 21) ist.

3. Vorrichtung nach Anspruch 1 oder 2, wobei die Achsen (3, 4) der Walzen (1, 2) in einer Ebene liegen, dadurch **gekennzeichnet,** daß die Achsen (3, 4) der Walzen (1, 2) zueinander parallel sind.

4. Vorrichtung nach einem der Ansprüche 1 bis 3, dadurch **gekennzeichnet,** daß jedes Dichtungselement (11, 12) unabhängig von der Spaltbreite jeweils mit dem zylindrischen Abschnitt (6, 5) der einen Walze (2, 1) in Dichtkontakt (15) steht und längs der kleineren Stirnfläche (7, 8) des Kegelstumpfabschnitts der anderen Walze (1, 2) in abdichtendem Kontakt verschiebbar ist.

5. Vorrichtung nach Anspruch 1 oder 2, wobei die Achsen (3, 4) der Walzen (1, 2) in einer Ebene liegen, dadurch **gekennzeichnet,** daß die Achsen (3, 4) der Walzen (1, 2) einander kreuzen.

6. Vorrichtung nach Anspruch 5, dadurch **gekennzeichnet,** daß die Dichtungselemente (11, 12) Winkelplatten sind, von denen unabhängig von der Spaltbreite die eine längs der kleineren Stirnflächen (7, 8) der Kegelstumpfabschnitte der beiden Walzen (1, 2) in abdichtendem Kontakt verschiebbar ist und die andere mit dem zylindrischen Abschnitt (5, 6) der beiden Walzen (1, 2) in Dichtkontakt bleibt.

7. Vorrichtung nach Anspruch 5 oder 6, dadurch **gekennzeichnet,** daß die Ebene, in der die Achsen (3, 4) der Walzen (1, 2) liegen, zur horizontalen Ebene unter einem solchem Winkel geneigt ist, daß der Kontaktwinkel der Schmelze mit den Mantelflächen (17, 18) der Walzen (1, 2) überall gleich ist.

8. Vorrichtung nach einem der vorhergehenden Ansprüche, dadurch **gekennzeichnet,** daß die Kegelstumpfabschnitte der beiden Walzen (1, 2) gleiche Kegelwinkel haben, die zwischen 6o° und 12o° liegen.

9. Vorrichtung nach Anspruch 8, dadurch **gekennzeichnet,** daß der Kegelwinkel der Kegelstumpfabschnitte der beiden Walzen (1, 2) 9o° beträgt.

10. Vorrichtung nach Anspruch 4 oder 6, dadurch **gekennzeichnet,** daß die Dichtungselemente (11, 12) aus Porenkanäle aufweisendem Graphit bestenen, die über Anschlußkanäle mit einer Lruckquelle für ein den Luftsauerestoff verdrängendes Schutzgas verbunden sind.

## Claims

1. Apparatus for rapid cooling and setting by the continuous casting of molten materials, in particular metal oxides, consisting of two hollow, internally fluid-cooled, rotary-driven rollers (1, 2), between which a gap (14) is provided, which is closed before continuous casting and open during continuous casting, also consisting of sealing elements (11, 12) , which cover the ends of the pouring space between the rollers (1, 2) and permit rotation of the rollers, characterised in that each of the rollers (1, 2) is formed as a frustoconical section, in that a cylindrical section (5, 6) with the diameter of the base face (9, 10) and a substantially open end face (23) is provided adjacent to the base face (9, 10) of each frustoconical section having the larger diameter, and in that each frustoconical section is sealed by a plane wall on the end face (7, 8) with the smaller diameter , the external shape of each roller (1, 2) approximating to the contour of a spherical hood (22).

2. Apparatus according to claim 1, characterised in that a shaft (20) driving the roller (1, 2) extends through the substantially open end face (23) of the cylindrical section (5, 6) as far as the end face (7, 8) of the frustoconical section with the smaller diameter and is fixed thereto (hub 21).

3. Apparatus according to claim 1 or 2, wherein the axes (3, 4) of the rollers (1, 2) lie in one plane, characterised in that the axes (3, 4) of the rollers (1, 2) are parallel to one another.

4. Apparatus according to one of claims 1 to 3, characterised in that each sealing element (11, 12) is in close contact (15) with the cylindrical section (6, 5) of one roller (2, 1), indepedently of the gap width, and can be moved into sealing contact along the smaller end face (7, 8) of the frustoconical section of the other roller (1, 2).

5. Apparatus according to claim 1 or 2, wherein the axes (3, 4) of the rollers (1, 2) lie in one plane, characterised in that the axes (3, 4) of the rollers (1, 2) intersect.

6. Apparatus according to claim 5, characterised in that the sealing elements (11, 12) are angle plates, one of which, independently of the gap width, can be moved into sealing contact along the smaller end faces (7, 8) of the frustoconical sections of the two rollers (1, 2), whilst the other remains in close contact with the cylindrical section (5, 6) of the two rollers (1, 2).

7. Apparatus according to claim 5 or 6, characterised in that the plane in which the axes (3, 4) of the rollers (1, 2) lie is inclined to the horizontal plane at such an angle that the contact angle of the melt to the casing faces (17, 18) of the rollers (1, 2) is universally equal.

8. Apparatus according to one of the preceding claims, characterised in that the frustoconical sections of the two rollers (1, 2) have the same cone angles, which lie between 60° and 120°.

9. Apparatus according to claim 8, characterised in that the cone angle of the frustoconical sections of the two rollers (1, 2) is 90°.

10. Apparatus according to claim 4 or 6, characterised in that the sealing elements (11, 12) consist of graphite having pore channels, which are connected via joining channels to a pressure source for protective gas for displacing atmospheric oxygen.

**Revendications**

1. Dispositif de refroidissement et de solidification rapides par coulée continue de matériaux fondue, en particulier d'oxydes métalliques, consistant en deux rouleaux (1, 2) creux, refroidis à l'intérieur par un fluide, entraînés en rotation, entre lesquels il est prévu un interstice (14) fermé avant la coulée continue et ouvert pendant la coulée continue, et en éléments d'étanchéité (11, 12) recouvrant la chambre de coulée entre les rouleaux (1, 2) du côté frontal et permettant la rotation des rouleaux, caractérisé en ce que chacun des rouleaux (1, 2) est sous forme d'une section tronconique, en ce qu'il est prévu au voisinage de la surface de base (9, 10) de chaque section tronconique qui présente le plus grand diamètre une section cylindrique (5, 6) du diamètre de la surface de base (9, 10) et avec une surface frontale (23) sensiblement ouverte, et en ce que chaque section tronconique est fermée sur la surface frontale (7, 8) de plus petit diamètre par une paroi plane, la forme extérieure de chaque rouleau (1, 2) se rapprochant du contour d'une calotte sphérique (22).

2. Dispositif selon la revendication 1, caractérisé en ce qu'un arbre (20) qui entraîne le rouleau (1, 2) s'étend à travers la surface frontale (23) sensiblement ouverte de la section cylindrique (5, 6) jusqu'à la surface frontale (7, 8) de la section tronconique de plus petit diamètre et y est fixé (moyeu 21).

3. Dispositif selon la revendication 1 ou 2, dans lequel les axes (3, 4) des rouleaux (1, 2) sont situés dans un plan, caractérisé en ce que les axes (3, 4) des rouleaux (1, 2) sont parallèles entre eux.

4. Dispositif selon l'une des revendication 1 à 3, caractérisé en ce que chaque élément d'étanchéité (11, 12) est en contact étanche (15) avec la section cylindrique (6, 5) d'un rouleau (2, 1) indépendamment de la largeur de l'interstice et est déplaçable en contact étanche le long de la plus petite surface frontale (7, 8) de la section tronconique de l'autre rouleau (1, 2).

5. Dispositif selon la revendication 1 ou 2, dans lequel les axes (3, 4) des rouleaux (1, 2) sont situés dans un plan, caractérisé en ce que les axes (3, 4) des rouleaux (1, 2) se coupent.

6. Dispositif selon la revendication 5, caractérisé en ce que les éléments d'étanchéité (11, 12) sont des plaques angulaires dont l'une est déplaçable en contact étanche le long des plus petites surfaces frontales (7, 8) des sections tronconiques des deux rouleaux (1, 2) indépendamment de la largeur de l'interstice et dont l'autre reste en contact étanche avec la section cylindrique (5, 6) des deux rouleaux (1, 2).

7. Dispositif selon la revendication 5 ou 6, caractérisé en ce que le plan dans lequel sont situés les axes (3, 4) des rouleaux (1, 2) est incliné par rapport au plan horizontal sous un angle tel que l'angle de contact du bain avec les surfaces d'enveloppe (17, 18) des rouleaux (1, 2) est partout le même.

8. Dispositif selon l'une des revendications précédentes, caractérisé en ce que les sections tronconiques des deux rouleaux (1, 2) ont des angles de cône identiques qui sont compris entre 60° et 120°.

9. Dispositif selon la revendication 8, caractérisé en ce que l'angle de cône des sections tronconiques des deux rouleaux (1, 2) est égal à 90°.

10. Dispositif selon la revendication 4 ou 6, caractérisé en ce que les éléments d'étanchéité (11, 12) consistent en graphite présentant des canaux de pores et sont reliés à une source de pression pour un gaz protecteur qui déplace l'oxygène de l'air.

**FIG.1**

**FIG. 2**

FIG. 3

FIG. 4